# EUROPEAN PATENT SPECIFICATION

(11) **EP 0 852 992 B1**
(45) Date of publication and mention of the grant of the patent: **21.04.2004**
(21) Application number: 98100102.7
(22) Date of filing: 07.01.1998
(51) Int. Cl.: B27K 3/15, B27K 5/06

(54) **Conservation of organic and inorganic materials**
Konservierung von organischen und inorganischen Materialien
Conservation de matériaux organiques et inorganiques

(30) Priority: 08.01.1997 US 780508
(43) Date of publication of application: 15.07.1998
(73) Proprietor: DOW CORNING CORPORATION, Midland Michigan 48686-0994 (US)
(72) Inventor: Klosowski, Jerome Melvin, Bay City, Michigan 48706 (US); Smith, Charles Wayne, Bryan, Texas 77807 (US); Hamilton, Donny L., Brian Texas 77897 (US)
(74) Representative: Sternagel, Fleischer, Godemeyer & Partner Patentanwälte

(56) References cited:
- EP-A- 0 747 183
- FR-A- 2 722 724
- US-A- 4 100 129
- US-A- 4 631 207
- US-A- 5 073 195
- US-A- 5 120 581
- US-A- 5 162 407
- DATABASE WPI Section Ch, Week 9125 Derwent Publications Ltd., London, GB; Class A82, AN 91-180976 XP002095014 & JP 03 108600 A (YOSHIDA H), 8 May 1991

## Description

This invention relates to the use of certain siloxane and silane materials for the conservation of organic and inorganic materials. More specifically, it provides a method of impregnating organic and inorganic materials with siloxanes, silanes or mixtures thereof; and then ultimately curing such materials to provide preservation or conservation properties to such materials. An especially significant use of this method is to preserve and conserve artifacts.

Plastination and/or conservation are terms that are often used in this art to denote the preservation of perishable biological specimens, especially soft, putrifiable materials with high moisture content. During plastination, water and part or all of the fats (if present), are replaced by a curable resin system or an elastomer system to optimize materials preservation and their natural or aesthetic appearance.

Plastination is utilized therefore, in the preservation of whole body organs and bones, both animal or human, for subsequent pathological and anatomical studies. In zoology, it is used for the plastination of small animals, such as beetles, spiders, frogs and reptiles, like turtles or salamanders. In botany, fungus and higher plant specimens are similarly preserved. Moreover, archeology employs such techniques for the preservation of wood, ceramics, pottery, glass, leather, jewelry and the like.

Similar preservation techniques have also been used for treating books, newspapers, photographs and like materials.

Plastination utilizes many different curable materials, for example, polyepoxides, polyesters, silicone rubbers and the like. The inventors herein are aware of several patents which show the use of certain materials for plastination processes. For example, U.S. Patents 2,106,261; 4,205,059; 2,244,992; 4,278,701; 4,291,101; 4,320,157 and 5,534,305; generally represent the prior art of said processes.

Basically, this invention provides a method of conserving organic and inorganic materials as defined in appended claim 1 and comprising the steps of impregnating a material selected from organic or inorganic materials with a curable composition comprising an organosilicon compound, or a mixture of organosilicon compounds, and thereafter initiating curing of the resultant product by exposing it to a catalyst or a mixture of catalysts. If said material initially contains moisture or body fluids, such as blood, this method may further comprise an initial step of dehydrating the selected material in a dehydration step using an acetone bath before conducting said impregnation step.

Another embodiment of this invention is a method in which the resultant product of our method is subjected to a complete and total cure. This conservation process may be conducted in the presence of ambient pressure, superatmospheric pressure, or subatmospheric pressure as is disclosed and known in the prior art.

The curable composition may comprise a siloxane polymer or a mixture of siloxane polymers having an average of at least two silanol groups per molecule. Alternatively the curable composition comprises a hydrolyzable silane or a mixture of hydrolyzable silanes.

According to an especially preferred embodiment the curable composition comprises:
(i) a siloxane polymer or a mixture of siloxane polymers having an average of at least two silanol groups per molecule and
(ii) sufficient crosslinker or a mixture of crosslinkers to crosslink at least a significant portion of (i), whereby the material to be conserved is impregnated with the composition comprising component (i) and (ii) or is first impregnated with component (i) and subsequently with component (ii) or vice versa.

The preferred crosslinker or mixture of crosslinkers is selected from the group consisting of hydrolyzable silanes having the formula RₐSi(X)₄₋ₐ wherein R is selected from phenyl, hydrogen, vinyl or an alkyl group having from 1-12 carbon atoms, a has a value of 0 or 1 and X is selected from hydroxyl, alkoxy having 1-12 carbon atoms, preferably 1-6 carbon atoms, carboxy, oximo, enoloxy, amido, ureido, carbamato and amino. Preferred hydrolyzable silanes or mixtures of hydrolyzable silanes are selected from the group consisting of isobutyltrimethoxysilane, oximosilane, tetraethylorthosilicate, acetoxysilane and alkoxysilane.

The preferred oximosilane is methyltrioximosilane and the preferred acetoxysilane is methyltriacetoxysliane, whereby a mixture of acetoxysilanes comprising methylacetoxysilane and ethylacetoxysilane in a weight ratio of 50 : 50 is especially preferred.

Another embodiment of this invention is a method wherein the curable composition comprises an organosilicon compound or mixture of organosilicon compounds having at least two silicon bonded hydrogen atoms per molecule and are selected from the group consisting of (a) silanes, (b) siloxanes, and (c) mixtures of (a), (b), or (a) and (b). Preferably the curable composition additionally comprises a siloxane polymer or a mixture of siloxane polymers having an average of at least two unsaturated groups per molecule and a platinum catalyst.

According to this embodiment the organosilicon compound or mixture of organosilicon compounds having at least two silicon bonded hydrogen atoms per molecule is preferably selected from the group consisting of cyclosiloxane polymers and non-cyclic siloxane polymers having a number average molecular weight of up to 10,000 g/mole. The cyclosiloxane may be selected from cyclic trimer siloxanes, cyclic tetramer siloxanes, and cyclic pentamer siloxanes.

The method of the present invention has utility for impregnating organic material selected from leather, wood, animal tissue, plant tissue, and paper or inorganic material selected from glass, pottery, and ceramic.

Finally, there is provided a method of configuring wood products, which method comprises (I) impregnating the wood product with a curable system selected from above and thereafter (II) configuring the wood product to a desired shape, and (III) while maintaining the wood product in the configuration of (II), curing the curable system.

With respect to this invention, the various embodiments may be performed in an environment of superatmospheric pressure, subatmospheric pressure or ambient pressure. Preferably a subatmospheric pressure in the range of 26.6-98.4 kPa (200-740 Torr) is applied. They may also be conducted at low temperature, high temperature or ambient temperature depending upon the organic or inorganic material being conserved. Optionally, the substrates already containing moisture or fluids utilized in this invention are subjected to a dehydration step in which any water is displaced, or is displaced by a solvent, preferably acetone. When adapted, our samples are typically dehydrated in acetone which is contained in a freezer mounted vacuum chamber (hereinafter "FMVC"). The FMVC, however, is not essential as shown in accompanying Example 5. After dehydration, the samples are then placed into our curable systems for impregnation. Each sample is next treated by our impregnating systems for a period of several hours as noted in the following examples. Our process is given in more detail in Example 1 below.

The siloxanes used in the examples are the following unless otherwise noted:
Siloxane 1 = a siloxane having an average of two vinyl groups per molecule, essentially on the molecule terminals and also having dimethylsiloxy units, said dimethylsiloxy units having a degree of polymerization (DP) of 100.
Siloxane 2 = a siloxane having an average of two hydroxy groups (silanol groups) per molecule, essentially on the molecule terminals and having dimethylsiloxy units, said dimethylsiloxy units having a DP of 100.
Siloxane 3 = a hydroxy terminated siloxane as in Siloxane 2 except its DP is 3 to 5.
Siloxane 4 = a hydroxy terminated siloxane as in Siloxane 2 except its DP is 35 to 40.
Siloxane 5 = a hydroxy terminated siloxane as in Siloxane 2 except its DP is 6 to 10.
Siloxane 6 = a hydroxy terminated siloxane as in Siloxane 2 except its DP is 300.

### Example 1 - Preservation of Corn Cobs

A large corn cob specimen recovered from the 1870 provenance of excavations at a Yorktown, Pennsylvania site was selected for this experiment.

Before treatment, the cob was stored in a glass jar in a mixture of alcohol and water to prevent crumbling during handling. The core area of the cob was completely hollow and although there was a great deal of debris and exfoliation in the alcohol/water solution, the cob was soft to the touch and did not crumble when handled.

The cob was removed from the alcohol/water solution and rinsed for one hour in a free-running gentle bath of fresh water as a means of removing sediment and debris from the surfaces of the cob. The cob was then placed on paper towels and allowed to drain of excess surface water for two minutes before it was weighed and measured. In addition to weight, measurements of the cob were recorded for the longest points along the length of the sample as well as the mid-section diameter point of the cob. The wet weight of the cob was 16.8 g and the sample measured 5.6 cm in length and 2.63 cm in width.

Before treatment, the cob was placed in an initial bath of acetone, which had been stored at the same temperature as the solution in which the cob had been stored, to prevent additional stress on the sample. The beaker containing the acetone and cob was then placed in a freezer mounted vacuum chamber (FMVC) and for six hours, a vacuum of 97.8 kPa (733.5 Torr) was applied. The cessation of rapid bubbling indicated that the cob had lost all of the water originally present therein. At this point, the acetone was replaced with fresh acetone that had also been stored in the freezer. The cob was allowed to sit in this solution in the freezer for twelve hours before impregnation.

After allowing free-running acetone to drain from the sample for less than one minute, the cob was placed in a clean, dry beaker and freezer cold polydimethylsiloxane fluid, having hydroxyl groups on each end of the molecule and having a number average molecular weight of 350 g/mole, was added to the beaker to submerge the cob. The cob was slightly buoyant in nature and, therefore, the cob was immersed beneath the surface of the silicone fluid using a fine mesh wire screen. With the screen in place, the beaker was placed in the FMVC and a vacuum of 97.8 kPa (733.5 Torr) was applied for eight hours and then the cob was allowed to sit in the silicone fluid in the freezer for twelve hours without any additional vacuum being applied.

Thereafter, the silicone fluid was carefully decanted from the beaker and the cob was removed and allowed to drain to separate excess moisture for two minutes. The cob was next placed in a clean beaker and ethyltrimethoxy-silane (ETM), as a crosslinker, was added in an amount suffient to submerge the cob. The beaker was then returned to the FMVC, and as before, a vacuum of 97.8 kPa (733.5 Torr) was applied. Very few bubbles were noted and after eight hours, the application of vacuum was discontinued and the cob was allowed to sit in solution in the freezer for an additional twelve hours.

A heated oven containing a chamber was used to heat the sample to 54.4°C. (130°F.) The heated oven consisted of an oven, containing a chamber inside, wherein said chamber was a polypropylene pail with a tight fitting lid which was inverted in the oven and laid on the bottom surface of the oven. On the inside surface of the pail lid was placed a small petri dish overlain by a wire support screen onto which was placed the cob. The petri dish was used to contain the desired catalyst for the curing step of our process. The pail was then placed on top of the lid in a manner to contain said petri dish and cob.

Next, 56.8 g (2 oz) of Fastcat™ 2003 catalyst were placed in the petri dish and the cob was subjected to the 54.4°C. (130°F.) temperature for a period of eight hours. Thereafter, the cob was removed from the chamber and examined. The surfaces of the cob were slightly wet to the touch. The catalyst was removed from the petri dish and 56.8 g (2 oz) of fresh catalyst were added. The cob was then placed in the chamber and subjected to an additional twenty-four hours at 54.4°C. (130°F.) After checking the cob for cure, it was exposed to an additional three days of treatment. At this point, pipe cleaners were saturated with the catalyst and the pipe cleaners were inserted into the core of the cob. Next, the outside of the cob was treated by sprinkling the catalyst on a lint free rag, and wrapping the cob in the cloth. The cob was then allowed to sit in this fashion at room temperature for two days and thereafter the cob was evaluated.

Comparisons were made between the cob treated by the process of this invention, and several other cobs that had been air-dried from waterlogged samples from the same provenance and time period. Our initial observations indicated that extensive shrinkage and distortion destroyed the aesthetics of the cobs which had been allowed to air-dry.

Very little particulate was noted in either the silicone liquid or the ETM after they were decanted following our treatment process by each material. Post treatment measurements and cob weights indicated that our process was very successful in preserving the original waterlogged artifact. The cob weighed 16.6 g and measured 5.6 cm in length and 2.5 cm in diameter, by measuring the same points on the cob from which the original measurements had been taken. The cob thus changed in weight by -1.2% and only diminished by -5.2% in diameter. The post treatment length of the cob remained the same as the initial wet length.

A comparison is readily made by reference to TABLE I. The cob is darker in color than the coloration of most of the corn cobs. No attempts were made at removing stains or discoloration which actually may have been caused by long time association of the artifact to sediments and other decomposing materials.

**TABLE I**

| SAMPLE | WEIGHT/g | LENGTH/cm | WIDTH/cm |
|---|---|---|---|
| Original wet dimensions | 16.80 | 5.60 | 2.63 |
| | | | |
| Post treatment dimensions | 16.60 | 5.60 | 2.50 |
| | | | |
| Percentage change | -1.2048% | 0.0% | 5.20% |

### Example 2 - Preservation of Cork

Six waterlogged corks from the 1692 provenance of excavations at Port Royal, Jamaica were used in this experiment. Three different siloxane liquids were also used, namely, polydimethylsiloxanes having hydroxy groups on each end of the molecule and having number average molecular weights of Siloxane A = 9000, Siloxane B = 2700 and Siloxane C = 550 g/mole, respectively. Before treatment, all six corks had been stored in a polyethylene bag in fresh tap water and all of the corks were removed from the bag, placed in a large vat and then rinsed with running water for two days. All of the corks were photographed, and their configurations were drawn on paper for later comparison. All of the corks were weighed and their dimensions measured. The data was then recorded. This information is found in TABLE IIA.

**TABLE IIA**

| WET | | | | |
|---|---|---|---|---|
| SPECIMEN | WEIGHT/g. | LENGTH/cm. | WIDTH/cm. | TREATMENT |
| 1 | 10.5 | 3.60 | 2.13 | air-dry |
| 2 | 6.7 | 2.83 | 1.73 | Siloxane A |
| 3 | 6.7 | 2.84 | 1.95 | Siloxane B |
| 4 | 5.0 | 2.86 | 1.66 | Siloxane B |
| 5 | 6.5 | 3.09 | 1.73 | Siloxane A |
| 6 | 4.0 | 2.64 | 1.62 | Siloxane C |

One cork was left to air dry and was labelled Specimen 1. The remainder of the corks were placed in a bath of acetone to dehydrate them. The beaker containing the acetone and corks was next placed in a FMVC and a vacuum of 97.8 kPa (733.5 Torr) was applied for eight hours. The acetone was decanted with fresh acetone added and this system was then stored in the freezer for 12 hours.

Separate beakers were filled each with Siloxane A, Siloxane B and Siloxane C. Thereafter, the corks were immersed therein and they were weighted to keep them submerged. A vacuum of 97.8 kPa (733.5 Torr) was then applied to all of the samples for five hours and the samples were allowed to sit with the vacuum off for twelve hours in the freezer. Next, all of the corks were removed and placed in a cotton bag. Subsequently, the cotton bag was immersed in methyhydrogencyclosiloxane as a crosslinker. A vacuum of 97.8 kPa (733.5 Torr) was applied for one hour and then the corks were removed and individually placed in an oven at 57.2°C. (135°F.) which contained a tray of Fastcat™ 2003 catalyst. They were held there for two days, and then they were allowed to stand for 24 hours. The corks were remeasured and reweighed and the results are found in TABLE IIB.

**TABLE IIB**

| SAMPLE | WEIGHT CHANGE/% | LENGTH CHANGE/% | WIDTH CHANGE/% |
|---|---|---|---|
| 1 | - 90.6 | - 27.8 | - 15.5 |
| 2 | - 55.2 | - 4.6 | 00.0 |
| 3 | - 43.3 | - 15.5 | - 5.1 |
| 4 | - 21.0 | - 14.3 | - 3.6 |
| 5 | - 69.2 | - 9.4 | 00.0 |
| 6 | - 50.0 | - 13.6 | - 10.5 |

### Example 3 - Preservation of Wood

To determine if our curable siloxane systems would cure in wooden artifacts, experiments were performed on fresh wood samples without our optional dehydration step being necessary because of the absence of initial moisture.

Thus, six samples of finely ground sawdust were prepared by mixing 2 g of the sawdust with 6.6 g of the polymer of Example 4. These samples were labeled as 1A, 1B, 1C, 1D, 1E, and 1F. Nine additional samples, each containing an additional 3 wt% of methyltrimethoxysilane (MTM) were also prepared and labeled 2A, 2B, 2C, 2D, 2E, 2F, 3B, 3D and 3F.

Sample numbers, catalyst types, chamber types and results are found in TABLE III.

**TABLE III**

| SAMPLE # | CATALYST | CHAMBER | RESULT |
|---|---|---|---|
| 1A | Tin Octoate | O | 1 |
| 1B | " | C | 1+ |
| 1C | DBTDA | O | 1+ |
| 1D | " | C | 2 |
| 1E | TPT | O | 1+ |
| 1F | " | C | 5 |
| 2A | Tin Octoate | O | 1+ |
| 2B | " | C | 2 |
| 2C | DBTDA | O | 1+ |
| 2D | " | C | 5 |
| 2E | TPT | O | 1+ |
| 2F | " | C | 5 |
| 3B | Tin Octoate | Glass/C | 1+ |
| 3D | DBTDA | " | 1+ |
| 3F | TPT | " | 2 |
| DBTDA = DBTDA TPT= tetraisopropyltitanate Op = open, where the top of the jar was left open inside of the containment chamber. C - closed, where the top of the jar was closed inside of the containment chamber. G/C = glass container, closed 0 = no change in the material. 1 = some thickening of the material 2 = very thick, some gellation 3 = very thick, light crosslinking, some crusting 4 = very nearly cured, slightly tacky 5 = totally cured, solid, non-tacky | | | |

Six waterlogged tongue depressors, that had been in contact with water for 10 years, were dehydrated in acetone in a FMVC. Next, they were placed in a solution of siloxane fluid mixed with 3 wt% MTM. The impregnation was conducted for 24 hours and thereafter the samples were placed in a glass containment chamber for catalyst treatment using DBTDA.

When finished, microscopy of thin cross sections of the finished samples indicated that these samples had been successfully bulked (conserved) with our curable siloxane system. Tongue depressors that had not been so treated, but were allowed to air dry, were warped and experienced extensive shrinkage when dried. Our treated tongue depressors retained the same features as the untreated control tongue depressors, that is tongue depressors that were not waterlogged and the siloxane treated depressors were slightly darker in color than the untreated controls.

### Example 4 - Preservation of Leather

Experiments were performed on leather to determine if it would assume impregnation to the extent that our process would be valuable for impregnating artifactual leather.

Six samples of fresh untreated (i.e. non-tanned) cow hide were dehydrated in the FMVC using acetone. Three samples were next subjected to a curable siloxane system consisting of Siloxane 2, combined with three wt% of MTM. One each of the three samples was subjected, respectively, to DBTDA, tin octoate {Sn(Oct)₂} and tetraisopropyltitanate (TPT) in closed, individual chambers. Furthermore, one each of the three additional samples were placed in open.containment chambers with each of the three catalysts.

The samples treated in the open ended containment chambers were considerably harder than their counterparts treated in closed containment chambers. The samples treated in said closed chambers remained more supple. All samples were impregnated.

A second set of pieces of semi-finished hides were dehydrated in acetone at room temperature for 18 hours at 94.5 kPa (711 Torr). The samples were then placed into fresh acetone in a 4 liter stainless steel beaker; and with a vacuum plate attached to the top of the beaker, the entire unit was placed in a freezer for 4 hours of FMVC treatment at 32.1 kPa (241 Torr). All sections were cut into sizes of 3.8 cm X 4.4 cm (1.5 in by 1.75 in) in measurement. After dehydration, two pieces of hide were placed directly in a 500 milliliter solution of Siloxane 2 with 3 weight % of MTM added. After placing a small piece of aluminum mesh over the samples to prevent them from floating while processing, the samples were placed into a 4 liter stainless steel beaker. A vacuum plate was then placed on top of this beaker and the entire assembly was placed into FMVC processing at 32.1 kPa (241 Torr). The samples were removed from this solution after five hours of treatment and each was lightly wiped with a paper towel to remove free flowing siloxane. The samples were next placed into 0.47 1 (one pint) sized containment chambers, which were fashioned by inverting a polyethylene container with a tight fitting lid such that the lid of the unit acted as a flat base. Twenty grams of DBTDA were then placed in the catalyst tray and both samples placed on a paper towel on a covered screen over the catalyst tray. The containment chamber was subsequently placed in position over the samples and tightly closed. The entire assembly was thereafter placed into a vented warming oven that had been set at 71.1°C. (160°F.), for 18 hours of vapor deposition. One of these samples was tested and it was designated Sample "A". Three additional samples were treated in the same way. These samples were designated "B", "C" and "D". Samples "E" and "F" were treated differently as found in TABLE IV.

**TABLE IV**

| SAMPLE | SILOXANE | CROSSLINKER | CATALYST | OBSERVATIONS | MICROSCOPY |
|---|---|---|---|---|---|
| A | Siloxane 6 | MTM | DBTDA | Dry, slightly stiff, white stress marks | Siloxane throughout |
| B | Siloxane 5 | MTM | DBTDA | dry, supple white stress marks | " |
| C | Siloxane 4 | MTM | DBTDA | more supple than 2, slightly damp | " |
| D | Siloxane 2 | MTM | DBTDA | supple but damp | " |
| E* | " | " | " | not as opaque as A-D | "** |
| F | Fresh hide, no treatment control sample | | | not as opaque as A-D | " |

| | | | | | |
|---|---|---|---|---|---|
| * Fresh hide, 6 hours of FMVC | | | | | |
| ** more opaque than D | | | | | |

### Example 5 - Preservation of Bobcat Pelt

A bobcat pelt, consisting of the entire head and back pelt from the animal was acetone dehydrated at ambient pressure and room temperature. Next, it was successfully preserved using a curable siloxane as in Example 4.

### Example 6 - Preservation of Bluestock Cowhide

Chromium-blue, partially processed bluestock cowhides and finished buffed hides, were treated as in Example 4. After treatment using DBTDA as catalyst, all of these samples were thin-sectioned for microscopic analysis. In all cases, the sections of bluestock had been thoroughly impregnated with our curable siloxane systems.

### Example 7 - Preservation of Tanned and Buffed Cowhide

A piece of tanned and buffed cowhide was successfully impregnated with a curable siloxane system using the siloxane polymer of Example 4 with three wt% of phenylmethyldimethoxysilane. The leather was lightly wiped with paper towel and thereafter treated with DBTDA in a small containment chamber.

### Example 8 - Preservation of Tanned and Buffed Cowhide

A similar piece of leather was treated with a curable siloxane system which consisted of the siloxane of Example 13 catalyzed with 3% DBTDA.

### Example 9 - Preservation of Animal Tissue (Dog Heart)

A dog heart was used in this experiment which was the size of a large chicken's egg. After soaking in cold running water for one hour, the heart was gently massaged for five minutes while submerged in cold water to facilitate the removal of as much blood from the organ before treatment as possible. After allowing the heart to drip dry of free flowing water for a few minutes, it was placed into 2 liters of fresh acetone and allowed to passively dehydrate in a covered container at room temperature for two days. The heart was then placed into a fresh bath of acetone and placed into a freezer for FMVC water/acetone displacement for 8 hours at 30.4 kPa (229 Torr).

The heart was subsequently removed from the acetone bath and placed into a solution of Siloxane 3 into which had been added 3 wt% of MTM. The process of acetone/siloxane displacement was started at room temperature for a period of 2 hours, in a large vacuum chamber with a recorded vacuum of 94.5 kPa (711 Torr). The heart in solution was then placed into a FMVC for 18 hours of continuous processing at 32.1 kPa (241 Torr). The heart was left in solution at ambient pressure in the freezer for 16 hours and then acetone/siloxane displacement was continued for an additional 6 hours at 32.1 kPa (241 Torr). The heart was later removed from the freezer and allowed to stand at room temperature in the solution for 2 hours. The heart was next transferred into another container and submerged in a solution of Siloxane (2) from Eample 13 which contained 3% MTM. The heart was returned to the freezer for 4 hours of FMVC treatment at 32.1 kPa (241 Torr). After our acetone/siloxane displacement process was completed, the heart was removed from the silicone oil and placed on a mesh screen, which also suspended over a large beaker. In this position, excess, free flowing siloxane was allowed to drip from the surfaces of the heart for one half hour. The heart was surface wiped to remove areas of heavily pooled siloxane from its surfaces. Using a small eye dropper, four drops of DBTDA were inserted into the uppermost large open end of an artery, located at the top of the heart.

The heart was then placed into a large containment chamber, fashioned by placing a large polyethylene pail and its tight fitting lid in an inverted position. In this position, the lid of the unit acted as a flat base on which a catalyst tray and specimen could be placed. Centrally located on the base of the containment chamber, a flat tray containing 88.7 ml (3 oz) of DBTDA was held in position using a small piece of double sided tape. A large piece of mesh screen was placed on top of this catalyst tray and its edges were folded over to firmly attach the screen to the sides of the catalyst tray. This screen acted as a platform on which the heart could be placed allowing it to be positioned directly over the fumes of catalyst during treatment. With the body of the containment chamber placed in position and firmly sealed, the assembly was next placed in a vented warming oven set at 71.1°C. (160°F.). The catalyst treatment lasted for 24 hours and then the heart was removed form the oven, placed into a vented fume hood and left in its containment chamber for five days at room temperature. Total time for the conservation process was seven days, although it is believed that the process should not take more than 4 to 5 days at most, under normal non-experimental conditions.

After the treatment, the heart was cut in half using a long blade knife. Thin sections of tissue taken from the thickest areas of the wall of the heart were collected and microscopic analysis of the samples indicated that the deep tissues of the heart had been successfully impregnated and crosslinked with siloxane. Aesthetically, the heart was very natural looking in contrast to prior art methods used for preserving heart tissue, i.e. the von Hagens process. The veins and arteries did not need to be especially dye colored since our inventive process appeared to maintain the red coloration of blood within the vessels of the tissue.

### Example 10 - Preservation of Animal Tissue (Pig Hearts)

Several pig hearts were placed in a large container of fresh, cold water which was arranged so that fresh water was pumped through the container continually. Additionally, the water was aerated such that it aided in the cleansing and removal of much of the blood remaining in the hearts. Aerated soaking continued for twenty four hours at room temperature. After cleaning, six of the hearts were stored in a water bath in a freezer. The remaining two hearts labeled Samples 1 and 2 were FMVC treated in fresh acetone for 48 hours at 30.4 kPa (229 Torr). Afterward, the hearts were removed from FMVC treatment and placed into a fresh bath of acetone. Passive dehydration continued for an additional 48 hours at room temperature. Sample 1 was removed from acetone and placed into a 4 liter stainless steel beaker containing 2 liters of Siloxane 2, which had 3 % MTM. The equipment was similar to that found in Example 16. A vacuum plate was placed over the top of the stainless steel beaker and after securing, the entire assembly was placed into a freezer for 58 hours of FMVC processing at 32.1 kPa (241 Torr). The heart was left in solution sitting in the freezer at ambient pressure for 5 hours.

Sample 1 was removed from the FMVC assembly and placed on a section of screen, sitting over a large container. In this position, the heart was allowed to drain of the free flowing siloxane for a short period of time and then the surfaces of the heart were wiped lightly with a paper towel. Sample 1 was next placed into a large beaker containing 500 ml of fresh MTM and moved around in the solution for one minute. Afterward, the heart was removed from the MTM and allowed to sit on paper towel until the containment chamber was prepared. Then, the sample was wiped with a paper towel that had been moistened with a few drops of DBTDA. Care was taken to ensure that all exterior surfaces of the heart had been wiped with the catalyst.

The containment chamber was set up as in the previous example. Thirty grams of DBTDA were placed in the catalyst tray. The containment chamber was then placed in a vented warming oven that had been set to 71.1°C. (160°F.). After 24 hours of vapor deposition, the sample was removed from the oven and thin sections were cut from the thickest parts of the heart showing that these parts were not firm and had not been totally treated by the process. Fresh catalyst was added to the catalyst tray and this sample was returned to the chamber. The unit was returned to the oven for an additional 48 hours of catalyst vapor deposition. The sample was again removed from the oven and thin sections were taken for analysis. On evaluation, we found an even distribution of cured silicone throughout the tissues of the heart. The heart appeared aesthetically nice and did not have any characteristic odor of decomposition.

Sample 2 was allowed to passively dehydrate for 168 hours in acetone at room temperature. It was then treated with water/acetone displacement for 6 hours using FMVC processing at 50.6 kPa (381 Torr). The sample was removed from the FMVC assembly and placed into a 4 liter stainless steel beaker containing Siloxane 2, 3 wt% MTM and 0.1 wt % of DBTDA. The sample was next subjected to the FMVC process for 19.5 hours. The sample was thereafter removed and drained of the siloxane fluid. It was dipped into fresh MTM for two minutes and moved in the MTM. It was allowed to drain and placed into the containment chamber and 88.7 ml (3 oz) of DBTDA were placed in the catalyst tray. The entire assembly was then placed into the oven at 71.1°C. (160°F.).

It was left there for eight days to ensure deep section cure. Under microscopic evaluation, it was evident that the deep tissues of the heart had been successfully impregnated and cured. There was no odor of degradation.

A third pig heart was initially placed into a 4 liter stainless steel container and placed into FMVC water/acetone displacement for 48 hours of passive treatment. It then received an additional 16.5 hours of FMVC treatment at 94.5 kPa (710 Torr). The heart was removed from the freezer and placed into 2 liters of fresh acetone where it was allowed to continue passive dehydration in room temperature acetone for 48 hours. The acetone was replaced daily so that through the two day period of dehydration at room temperature, the acetone was changed once.

This heart, Sample 3, was subsequently removed from the water/acetone displacement and placed directly into a stainless steel beaker containing 2 liters of Siloxane 2 with 3 wt% MTM. The heart was weighted down with a section of mesh screen and a small weight and a vacuum plate were attached to the beaker top. The entire assembly was next placed into a freezer for FMVC acetone/siloxane displacement at 94.8 kPa (710 Torr). The heart remained in treatment for 9 hours at 79.7 kPa (531 Torr).

The heart was thereafter removed from the siloxane and placed on a section of mesh screen so that free flowing siloxane could drip from the surface. The surface was wiped gently with a paper towel. DBTDA was next applied to the surface by hand, using a cotton glove covering a rubber glove and the heart was massaged to cover all of the crevices and irregularities of the surface. In addition, DBTDA was placed in the catalyst tray and the heart was treated by sealing the chamber and warming the oven for 6 days at 71.1°C. (160°F.).

Upon removal from the oven, the heart had a firm texture and microscopic analysis of several thin sections indicated that it was completely preserved.

### Example 11 - Preservation of Animal Tissue (Pig Hearts)

A pig heart, designated "B", was dehydrated in acetone for 48 hours in the FMVC. This was followed by two days of passive acetone dehydration at ambient pressure and room temperature. Fresh acetone was next placed in the stainless steel container and the heart remained in passive dehydration for an additional 168 hours. Then, the organ was further dehydrated in acetone using freezer vacuum for an additional six hours. It was then treated with a curable system using the system set forth in Example 4. The heart was drained of free-flowing solution, placed in MTM for two minutes and subsequently treated with DBTDA in a conventional containment chamber. It was treated for eight days. Microscopic investigation showed that the heart had been thoroughly conserved by our cured siloxane system.

### Example 12 - Preservation of Animal Tissue (Pig Hearts)

Another pig heart, designated "C", was treated with extensive acetone dehydration before conservation. Then, the heart was subjected to 48 hours of FMVC dehydration followed by two days of sitting in acetone in the freezer at ambient pressure. The heart was next placed in fresh acetone and allowed to sit at ambient pressure and room temperature for an additional two days. After treating with a curable siloxane system as in Example 4, for thirty three hours, the heart was removed from the solution and the surface wiped with a paper towel. DBTDA was thereafter massaged into the surfaces and crevices of the heart. After six days of treatment, the heart was completely conserved.

### Example 13 - Preservation of Paper

Pages of a very old book which were yellowed and brittle were crumpled by hand and then placed into a common blender and reduced to a consistent fine powder.

Six samples were prepared, each containing 7.0 g. of Siloxane 2 and 1.25 g. of the crumpled paper. These samples were labelled 1A, 1B, 1C, 1D, 1E, and 1F. Eight additional samples, each containing 7.0 g. of siloxane fluid and 3 wt% MTM and 1.25 g. of paper were mixed in individual aluminum trays. These were labelled as 2A, 2B, 2C, 2D, 2E, 2F, and 3B, and 3D.

Individual containment chambers were created for this experiment using 0.47 1 (one pint) polyethylene cups with tight fitting lids. In an inverted position, the lid formed a flat base with the body of the container acting as a lid. Two 0.95 1 (one quart) jars were used as containment chambers for samples 3B and 3D. Placement of catalyst and sample trays were done as in the previous examples. Other than material composition, the volume with the glass chambers was double that of the polyethylene cups. A small piece of double sided tape was used to secure an aluminum sample tray to the base of the unit. In this tray, the designated catalyst for the sample being tested was placed. A piece of open mesh screen, measuring 11.3 cm (1.75 in) square was then placed over the aluminum tray and its edges were folded over to secure the screen on top of the catalyst tray. This screen acted as a mounting platform upon which an aluminum tray holding the sample being tested was placed. In this position, the sample was directly above the catalyst tray, minimizing any splashing that might occur while placing the containment chamber in the warming oven. With the body of the containment chamber in place, all samples were then placed into a vented warming oven which had been set at 70°C. Vapor deposition continued in this oven for 48 hours. The results are given in TABLE V.

**TABLE V**

| SAMPLE | TREATMENT | CATALYST | CHAMBER TYPE | RESULTS |
|---|---|---|---|---|
| 1A | Siloxane 2 | Sn(Oct)₂ | Op | 1 |
| 1B | " | " | C | 1 |
| 1C | " | DBTDA | Op | 2 |
| 1D | " | " | C | 2+ |
| 1E | " | TPT | Op | 1 |
| 1F | " | " | C | 1 |
| 2A | " + MTM | Sn(Oct)₂ | Op | 2 |
| 2B | " " | " | C | 4+ |
| 2C | " " | DBTDA | Op | 3 |
| 2D | " " | " | C | 5 |
| 2E | " " | TPT | Op | 4+ |
| 2F | " " | " | C | 5 |
| 3B | " " | Sn(Oct)₂ | G/C | 2+ |
| 3D | " " | DBTDA | G/C | 2+ |
| TABLE V KEY | | | | |
| Sn(Oct)₂ = Tin Octoate | | | | |
| MTM = methyltrimethoxysilane | | | | |
| DBTDA = dibutyltindiacetate | | | | |
| TPT= tetraisopropyltitanate | | | | |
| Op = open, where the top of the jar was left open inside of the containment chamber. | | | | |
| C - closed, where the top of the jar was closed inside of the containment chamber. | | | | |
| G/C = glass container, closed | | | | |
| 0 = no change in the material. | | | | |
| 1 = some thickening of the material | | | | |
| 2 = very thick, some gellation | | | | |
| 3 = very thick, light crosslinking, some crusting | | | | |
| 4 = very nearly cured, slightly tacky | | | | |
| 5 = totally cured, solid, non-tacky | | | | |

### Example 14 - Preservation of Glass

Experiments using glass as the substrate to be conserved were performed using the same methodologies as above.

Panes of glass were placed in a plastic bag and hammered until the glass was reduced to very small particles. The particles were then placed into a blender and by using the pulse button, the particles were reduced to a very fine glass. The ratio of glass to the treatment material was 15 g of glass to 3.55 g of the treatment material which was the same materials in the same ratios as used in Example 13.

The results are found in TABLE VI.

**TABLE VI**

| | | | CHAMBER | |
|---|---|---|---|---|
| SAMPLE | TREATMENT | CATALYST | TYPE | RESULTS |
| 1A | Siloxane 2 | Sn(Oct)₂ | Op | 1+ |
| 1B | " | " | C | 4+ |
| 1C | " | DBTDA | Op | 1+ |
| 1D | " | " | C | 4+ |
| 1E | " | TPT | Op | 1+ |
| 1F | " | " | C | 5 |
| 2A | " + MTM | Sn(Oct)₂ | Op | 1+ |
| 2B | " " " | " | C | 7 |
| 2C | " " " | DBTDA | Op | 5+ |
| 2D | " " " | " | C | 7 |
| 2E | " " " | TPT | Op | 2 |
| 2F | " " " | " | C | 5 |
| 3B | " " " | Sn(Oct)₂ | G/C | 6 |
| 3D | " " " | DBTDA | G/C | 5+ |
| 3F | " " " | TPT | G/C | 6 |
| Sn(Oct)₂ = Tin Octoate | | | | |
| MTM= methyltrimethoxysilane | | | | |
| DBTDA = dibutyltindiacetate | | | | |
| TPT= tetraisopropyltitanate | | | | |
| Op = open, where the top of the jar was left open inside of the containment chamber. | | | | |
| C - closed, where the top of the jar was closed inside of the containment chamber. | | | | |
| G/C = glass container, closed | | | | |
| 0 = no change in the material. | | | | |
| 1 = some thickening of the material | | | | |
| 2 = very thick, some gellation | | | | |
| 3 = very thick, light crosslinking, some crusting | | | | |
| 4 = thick top layer, very wet underneath | | | | |
| 5 = solid top layer, wet underneath | | | | |
| 6 = very nearly cured, solid and tacky | | | | |
| 7 = totally cured, solid and non-tacky | | | | |

### Example 15 - Preservation of Glass

This experiment was performed on waterlogged, devitrified archaeological glass which was recovered from excavations of the 1692 provenance of Port Royal, Jamaica.

The glass was already in fragments and these fragments were taken from a section of broken bottle which is commonly called onion bottle. These bottles are found in abundance at the Port Royal site. When recovered from site excavations, care must be taken to keep these bottles wet during transport to the lab and during curation for conservation. If allowed to air dry, it is not uncommon to see large layers or flakes exfoliate from the surfaces of the bottles, much like removing layers from an onion. If left to dry, an intact bottle can be reduced to rubble in a short period of time.

Before treatment with our siloxane systems, all samples of glass were placed into a large stainless steel beaker and immersed in one liter of fresh acetone. The samples were then dehydrated in a FMVC for four hours at 97.6 kPa (733.5 Torr). The glass was next removed from the acetone and placed into a 200 g solution of Siloxane 2, to which 3 wt% of MTM was added. The samples in solution were thereafter placed in a freezer and a vacuum plate was placed over the stainless steel beaker. Acetone/ silicone solution displacement was conducted on this these samples for six hours under vacuum. After treatment, the glass samples were removed from the siloxane mixture and gently blotted with a paper towel to remove most of the free flowing and surface pooled liquid.

The samples were subsequently subjected to catalyst vapors according to the apparatus and procedures of Example 13. Thirteen g. of DBTDA were placed in the catalyst tray for these experiments and the containment chamber was heated to 71.1°C. (160°F.) with the samples left therein for sixteen hours. TABLE VII lists the treatments for Samples 1 through 3.

**TABLE VII**

| SAMPLE | TREATMENT | CATALYST |
|---|---|---|
| 1 | Siloxane 2 + 3%MTM | DBTDA |
| 2 | Siloxane 5 + " | " |
| 3 | Siloxane 4 + " | " |

Several additional samples of glass were prepared. The process for Sample 4 was modified in that after acetone dehydration, the sample was removed from acetone and then placed directly into a container with a sufficient amount of MTM to submerge the glass sample totally. The sample in solution was then placed into a large stainless steel beaker and after placing a vacuum plate over the beaker, a vacuum was applied for six hours. After treatment, the glass was lightly surface blotted with a paper towel. After blotting, the sample was placed into an individual containment chamber identical to those described above. The sample was next placed alongside the other samples in the vented warming oven for 16 hours at 71.1°C. (160°F.).

Sample 5 was not acetone dehydrated before treatment. The sample was rinsed in fresh running water and then submerged in a beaker of fresh MTM. The beaker containing the sample in solution was placed into a four liter stainless steel beaker and after a vacuum was applied, the entire assembly was placed inside a freezer for six hours.

After treatment, the sample was left in the freezer in solution and at ambient pressure for another 18 hours and then subjected to the catalyst vapor for twenty-four hours at 71.1°C. (160°F.).

Sample 6 consisted of four small samples of glass. These samples were rinsed in running tap water for one hour and then they were placed directly into 200 g of Siloxane 3 in which there was 3% MTM. These samples were next placed in a FMVC and treated in solution for six hours under vacuum.

After treatment, the samples were left in solution in the freezer at ambient pressure for another eighteen hours. The samples were removed from the siloxane mixture and lightly patted with a paper towel to remove free flowing surface solution. The samples were subsequently placed into the same containment chamber used in previous examples. The samples were subjected to catalyst vapor, as above, for 24 hours at 71.1°C. (160°F.).

The samples were subjectively evaluated for clarity of glass, overall aesthetics, presence or absence of a "rainbow" discoloration or surface filminess and overall integrity of the samples. The results are found in TABLE VIII.

**TABLE VIII**

| SAMPLE | INITIAL EVALUATION | 24 HOUR EVALUATION |
|---|---|---|
| 1 | slightly tacky, glossy, to semi-glossy, no flaking, aesthetically good | Good overall |
| | | |
| 2 | dry, glossy to semi-glossy, good color, oxides on glass are consolidated | Very good overall |
| | | |
| 3 | surface not uniformly coated, some pooled and cured siloxane, not aesthetically pretty | Reasonably good |
| | | |
| 4 | dry, clear, aesthetically good | Good to Excellent overall |
| | | |
| 5 | rainbow coloration, opaque layer noted, dead glass appearance, poor | Very poor |
| | | |
| 6 | slight rainbow coloration, glass not flaking, surface appears stable | Reasonable appearance |
| | | |
| 7 | uniform glass color, material is well consolidated | Good to Excellent |

### Experiment 16 Preservation of Animal Tissue (GoldFish)

Experiments were conducted to preserve fish using small goldfish. The use of vacuum during processing in this case did not lend itself well to the preservation sought because the goldfish were too fragile for vacuum treatment and either split apart or separated.

Therefore, the procedure was modified. Two goldfish were subjected to long term passive dehydration. These fish were stored in fresh acetone for two months at room temperature and ambient pressure. After dehydration, the specimens were placed into Siloxane 3 containing MTM. The fish were weighted down so that solution covered them. They were treated in this manner for 2 hours at room temperature. Then, vacuum was slowly increased over the first thirty minutes of treatment, ultimately reaching a vacuum of 94.5 kPa (711.2 Torr). The samples were subsequently transferred to a freezer for 1 hour of FMVC treatment. The samples were left in solution in the freezer at ambient pressure over the weekend. The samples were retreated using the FMVC process for an additional 7.5 hours at 6.8 kPa (50.8 Torr). The samples were next removed from the freezer and solution and lightly patted on the surface with a paper towel. Sample 1 was placed into a small containment chamber using the methodologies of Example 13. With 20 g of DBTDA in the catalyst tray, the sample was sealed in the container and placed into a vented warming oven set at 71.1°C. (160°F.) for 18 hours.

Sample 2 was removed from the siloxane mixture and after lightly patting the surface with a towel, the sample was mounted onto a small containment chamber. Twenty g of tin dioctoate were used for the catalyst. This treatment was performed for 18 hours. After treatment, both samples were removed from the oven and allowed to sit for 24 hours.

Sample 1 was totally dry and aesthetically pleasing. The skin texture of the fish and the fine details of the fins were well preserved. Sample 2 was equally well preserved although there was a slight blemish or blotchy appearance on one side of the finished specimen. The samples were both very natural looking and appeared to be well preserved.

## Claims

1. A method of conserving organic and inorganic materials comprising:
(A) impregnating a material to be conserved with a curable composition comprising an organosilicon compound or a mixture of organosilicon compounds, and thereafter
(B) exposing the product of (A) to a catalyst or mixture of catalysts for a time sufficient to initiate curing of the resultant product.

2. The method of claim 1 wherein the curable composition comprises a compound selected from the group consisting of
(I) a siloxane polymer or a mixture of siloxane polymers having an average of at least two silanol groups per molecule,
(II) a hydrolyzable silane or a mixture of hydrolyzable silanes,
(III) an organosilicon compound or mixture of organosilicon compounds having at least two silicon bonded hydrogen atoms per molecule and are selected from the group consisting of (a) silanes, (b) siloxanes, and (c) mixtures of (a), (b), or (a) and (b), and
(IV) (i) a siloxane polymer or a mixture of siloxane polymers having an average of at least two silanol groups per molecule and (ii) sufficient crosslinker or a mixture of crosslinkers to crosslink at least a significant portion of (i), whereby the material in step (A) is impregnated with the composition comprising component (i) and (ii) or is first impregnated with component (i) and subsequently with component (ii) or vice versa.

3. The method of claim 2 wherein the crosslinker or mixture of crosslinkers is selected from the group consisting of hydrolyzable silanes having the formula RₐSi(X)₄₋ₐ wherein R is selected from phenyl, hydrogen, vinyl or an alkyl group having from 1-12 carbon atoms, a has a value of 0 or 1 and X is selected from hydroxyl, alkoxy having 1-12 carbon atoms. preferably 1-6 carbon atoms, carboxy, oximo, enoloxy, amido, ureido, carbamato and amino.

4. The method of claim 2 or 3 wherein said hydrolyzable silane or mixture of hydrolyzable silanes is selected from the group consisting of isobutyltrimethoxysilane, oximosilane, tetraethylorthosilicate, acetoxysilane and alkoxysilane.

5. The method of claim 4 wherein the oximosilane is methyltrioximosilane.

6. The method of claim 4 wherein the acetoxysilane is methyltriacetoxysliane.

7. The method of claim 4 wherein the mixture of hydrolyzable silanes is a mixture of methylacetoxysilane and ethylacetoxysilane in a weight ratio of 50 : 50.

8. The method of claim 1 wherein the curable composition comprises (III) and additionally comprises a siloxane polymer or a mixture of siloxane polymers having an average of at least two unsaturated groups per molecule and a platinum catalyst.

9. The method of claim 1 or 8 wherein the organosilicon compound or mixture of organosilicon compounds having at least two silicon bonded hydrogen atoms per molecule (III) is selected from the group consisting of cyclosiloxane polymers and non-cyclic siloxane polymers having a number average molecular weight of up to 10,000 g/mole.

10. The method of claim 9 wherein the cyclosiloxane is selected from cyclic trimer siloxanes, cyclic tetramer siloxanes, and cyclic pentamer siloxanes.

11. The method of any of the preceding claims further comprising the complete curing of the resultant product.

12. The method of any of the preceding claims further comprising the initial step of dehydrating the selected material in an acetone and water bath before conducting step (A).

13. The method of any of the preceding claims wherein the impregnated material is an organic material selected from leather, wood, animal tissue, plant tissue, and paper or inorganic material selected from glass, pottery, and ceramic.

14. A method of impregnating wood products that have been previously exposed to moisture according to the methods of any of claims 1 to 13 comprising a further step of:
(AA) shaping the wood products into the desired configuration; and
(B) while maintaining the wood product in the configuration of (AA), initiating curing thereof.

15. The method of claim 14 further comprising the complete cure of the resultant product.

16. A method according to claim 13, wherein said material is selected from animal tissue, plant tissue, glass and pottery.

## Patentansprüche

1. Ein Verfahren zum Konservieren von organischen und anorganischen Materialien, umfassend:
(A) das Imprägnieren eines Materials, das konserviert werden soll mit einer härtbaren Zusammensetzung, die eine Organosiliciumverbindung oder eine Mischung aus Organosiliciumverbindungen enthält, und danach
(B) Aussetzen des Produktes aus (A) gegenüber einem Katalysator oder einer Mischung aus Katalysatoren für eine Zeit, die ausreicht, um das Härten des sich ergebenden Produktes zu initiieren.

2. Das Verfahren gemäß Anspruch 1, wobei die härtbare Zusammensetzung eine Verbindung enthält, ausgewählt aus der Gruppe, bestehend aus
(I) einem Siloxanpolymer oder einer Mischung aus Siloxanpolymeren mit im Durchschnitt wenigstens zwei Silanolgruppen je Molekül,
(II) einem hydrolysierbarem Silan oder einer Mischung aus hydrolysierbaren Silanen,
(III) einer Organosiliciumverbindung oder einer Mischung aus Organosiliciumverbindungen mit wenigstens zwei siliciumgebundenen Wasserstoffatomen je Molekül, und die ausgewählt sind aus der Gruppe, bestehend aus (a) Silanen, (b) Siloxanen und (c) Mischungen aus (a), (b) oder (a) und (b), und
(IV) (i) einem Siloxanpolymer oder einer Mischung aus Siloxanpolymeren mit im Durchschnitt wenigstens zwei Silanolgruppen je Molekül und (ii) genügend Vernetzer oder eine Mischung von Vernetzern, um wenigstens einen bedeutsamen Teil von (i) zu vernetzen, wobei das Material in Schritt (A) mit der Zusammensetzung imprägniert ist, die die Komponente (i) und (ii) enthält, oder die zuerst mit der Komponente (i) imprägniert wird und anschließend mit der Komponente (ii), oder umgekehrt.

3. Das Verfahren gemäß Anspruch 2, worin der Vernetzer oder die Mischung von Vernetzern ausgewählt ist aus der Gruppe, bestehend aus hydrolysierbaren Silanen mit der Formel RₐSi(X)₄₋ₐ, worin R ausgewählt ist aus Phenyl, Wasserstoff, Vinyl oder einer Alkylgruppe mit 1 bis 12 Kohlenstoffatomen, a einen Wert von 0 oder 1 hat und X ausgewählt ist aus Hydroxyl, Alkoxy mit 1 bis 12 Kohlenstoffatomen, bevorzugt 1 bis 6 Kohlenstoffatomen, Carboxy, Oximo, Enoloxy, Amido, Ureido, Carbamat und Amino.

4. Das Verfahren gemäß Anspruch 2 oder 3, wobei das hydrolysierbare Silan oder die Mischung aus hydrolysierbaren Silanen ausgewählt ist aus der Gruppe, bestehend aus Isobutyltrimethoxysilan, Oximosilan, Tetraethylorthosilicat, Acetoxysilan und Alkoxysilan.

5. Das Verfahren gemäß Anspruch 4, wobei das Oximosilan Methyltrioximosilan ist.

6. Das Verfahren gemäß Anspruch 4, worin das Acetoxysilan Methyltriacetoxysilan ist.

7. Das Verfahren gemäß Anspruch 4, wobei die Mischung aus hydrolysierbaren Silanen eine Mischung aus Methylacetoxysilan und Ethylacetoxysilan in einem Gewichtsverhältnis von 50 : 50 ist.

8. Das Verfahren gemäß Anspruch 1, wobei die härtbare Zusammensetzung (III) enthält und außerdem ein Siloxanpolymer oder eine Mischung aus Siloxanpolymeren mit im Mittel wenigstens zwei ungesättigten Gruppen je Molekül und einen Platinkatalysator enthält.

9. Das Verfahren gemäß Anspruch 1 oder 8, wobei die Organosiliciumverbindung oder die Mischung aus Organosiliciumverbindungen mit wenigstens zwei siliciumgebundenen Wasserstoffatomen je Molekül (III) ausgewählt ist aus der Gruppe, bestehend aus Cyclosilanpolymeren und nicht-cyclischen Siloxanpolymeren mit einem zahlenmittleren Molekulargewicht von bis zu 10.000 g/mol.

10. Das Verfahren gemäß Anspruch 9, wobei das Cyclosiloxan ausgewählt ist aus cyclischen trimeren Siloxanen, cyclischen tetrameren Siloxanen und cyclischen pentameren Siloxanen.

11. Das Verfahren gemäß einem der vorangehenden Ansprüche, außerdem umfassend das vollständige Härten des sich ergebenden Produktes.

12. Das Verfahren gemäß einem der vorangehenden Ansprüche, außerdem umfassend den initialen Schritt des Dehydrierens des ausgewählten Materials in einem Aceton- und Wasserbad, bevor Schritt (A) ausgeführt wird.

13. Das Verfahren gemäß einem der vorangehenden Ansprüche, wobei das imprägnierte Material ein organisches Material ist, ausgewählt aus Leder, Holz, einem tierischen Gewebe, einem pflanzlichen Gewebe und Papier, oder einem anorganischen Material, ausgewählt aus Glas, Töpferware und Keramik.

14. Ein Verfahren zum Imprägnieren von Holzprodukten, die zuvor Feuchtigkeit ausgesetzt waren, gemäß den Verfahren entsprechend einem der Ansprüche 1 bis 13, umfassend einen weiteren Schritt:
(AA) Ausformen des hölzernen Produktes in die gewünschte Konfiguration, und
(B) während das Holzprodukt in der Konfiguration aus (AA) gehalten wird, Initiieren des Härtens dieses Produktes.

15. Das Verfahren gemäß Anspruch 14, außerdem umfassend das vollständige Aushärten des sich ergebenden Produktes.

16. Ein Verfahren gemäß Anspruch 13, wobei dieses Material ausgewählt ist aus tierischem Gewebe, pflanzlichem Gewebe, Glas und Töpferware.

## Revendications

1. Procédé pour la conservation de matières organiques et inorganiques comprenant :
(A) l'imprégnation d'une matière à conserver avec une composition durcissable comprenant un composé d'organosilicium ou un mélange de composés d'organosilicium, et après cela
(B) l'exposition du produit de (A) à un catalyseur ou un mélange de catalyseurs sur une durée suffisante pour initier le durcissement du produit résultant.

2. Procédé selon la revendication 1, dans lequel la composition durcissable comprend un composé choisi parmi
(I) un polymère de siloxane ou un mélange de polymères de siloxane ayant une moyenne d'au moins deux groupes silanol par molécule.
(II) un silane hydrolysable ou un mélange de silanes hydrolysables,
(III) un composé d'organosilicium ou un mélange de composés d'organosilicium ayant au moins deux atomes d'hydrogène liés au silicium par molécule et qui sont choisis parmi (a) des silanes, (b) des siloxanes et (c) des mélanges de (a), (b) ou (a) et (b), et
(IV) (i) un polymère de siloxane ou un mélange de polymères de siloxane ayant une moyenne d'au moins deux groupes silanol par molécule et (ü) suffisamment d'agent de réticulation ou d'un mélange d'agents de réticulation pour réticuler au moins une partie significative de (i), la matière est par là imprégnée dans l'étape (A) avec la composition comprenant le constituant (i) et (ü) ou est tout d'abord imprégnée avec le constituant (i) et ensuite avec le constituant (ü) ou vice versa.

3. Procédé selon la revendication 2, dans lequel l'agent de réticulation ou le mélange d'agents de réticulation est choisi parmi des silanes hydrolysables ayant la formule RₐSi(X)₄₋ₐ, où R est choisi parmi un groupe phényle, un atome d'hydrogène, un groupe vinyle ou alkyle ayant 1-12 atomes de carbone, a présente une valeur de 0 ou 1 et X est choisi parmi un groupe hydroxyle, alcoxy ayant 1-12 atomes de carbone, de préférence 1-6 atomes de carbone, carboxy, oximo, énoloxy, amido, uréido, carbamato et amino.

4. Procédé selon la revendication 2 ou 3, dans lequel ledit silane hydrolysable ou mélange de silanes hydrolysables est choisi parmi l'isobutyltriméthoxysilane, l'oximosilane, le tétraéthylorthosilicate, l'acétoxysilane et un alcoxysilane.

5. Procédé selon la revendication 4, dans lequel l'oximosilane est le méthyltrioximosilane.

6. Procédé selon la revendication 4, dans lequel l'acétoxysilane est le méthyltriacétoxysilane.

7. Procédé selon la revendication 4, dans lequel le mélange de silanes hydrolysables est un mélange de méthylacétoxysilane et d'éthylacétoxysilane dans un rapport massique de 50:50.

8. Procédé selon la revendication 1, dans lequel la composition durcissable comprend (III) et comprend de plus un polymère de siloxane ou un mélange de polymères de siloxane ayant une moyenne d'au moins deux groupes insaturés par molécule et un catalyseur de platine.

9. Procédé selon la revendication 1 ou 8, dans lequel le composé d'organosilicium ou le mélange de composés d'organosilicium ayant au moins deux atomes d'hydrogène liés au silicium par molécule (III) est choisi parmi des polymères de cyclosiloxane et des polymères de siloxane non-cycliques ayant un poids moléculaire moyen en nombre allant jusqu'à 10 000 g/mole.

10. Procédé selon la revendication 9, dans lequel le cyclosiloxane est choisi parmi des siloxanes trimères cycliques, des siloxanes tétramères cycliques et des siloxanes pentamères cycliques.

11. Procédé selon l'une quelconque des revendications précédentes comprenant en outre le durcissement complet du produit résultant.

12. Procédé selon l'une quelconque des revendications précédentes comprenant en outre l'étape initiale de déshydratation de la matière choisie dans un bain d'acétone et d'eau avant la réalisation de l'étape (A).

13. Procédé selon l'une quelconque des revendications précédentes, dans lequel la matière imprégnée est une matière organique choisie parmi du cuir, du bois, un tissu animal, un tissu végétal et du papier ou une matière inorganique choisie parmi du verre, une poterie et une céramique.

14. Procédé pour l'imprégnation de produits en bois qui ont été préalablement exposés à de l'humidité selon les procédés selon l'une quelconque des revendications 1 à 3 comprenant une autre étape consistant :
(AA) à façonner les produits en bois en la forme souhaitée; et
(B) tout en maintenant le produit en bois dans la forme de (AA), à initier le durcissement de celui-ci.

15. Procédé selon la revendication 14 comprenant en outre le durcissement complet du produit résultant.

16. Procédé selon la revendication 13, dans lequel ladite matière est choisie parmi un tissu animal, un tissu végétal, du verre et une poterie.
